# DEMANDE DE BREVET EUROPEEN

(11) **EP 0 881 368 A1**
(43) Date de publication de la demande: **02.12.1998**
(21) Numéro de dépôt: 98401169.2
(22) Date de dépôt: 15.05.1998
(51) Int. Cl.: F02B 17/00

(54) **Moteur à injection directe et allumage commandé**

(30) Priorité: 29.05.1997 FR 9706616
(71) Demandeur: RENAULT, 92109 Boulogne-Billancourt (FR)
(72) Inventeur: Dagand, Françoise, 93500 Rueil Malmaison (FR); Delaire, Alain, 92250 La Garenne Colombes (FR); Floch, Alain Emile Guillaume, 91460 Marcoussis (FR)
(74) Mandataire: Fernandez, Francis

(57) **Abrégé**

Le moteur comprend une chambre de combustion (201) à bougie centrée et injecteur excentré, un élément de culasse (204) en forme de toit dont l'arête s'étend entre les orifices d'admission (207, 208) et les orifices d'échappement (209, 210) avec l'injecteur excentré (216) débouchant dans la chambre entre les plans diamétraux verticaux (P1, P2), perpendiculaires à l'arête, des orifices d'admission (207, 208). Il comprend également un piston coulissant (203) dont la face supérieure comporte une cavité excentrée (226) située sous les orifices d'admission (207, 208) et s'étendant sans discontinuité de surface depuis une zone proche de la périphérie du piston jusqu'à une zone centrale située sous la bougie (217).

## Description

L'invention concerne les moteurs à injection directe et allumage commandé et plus particulièrement les chambres de combustion de ces moteurs.

Par opposition aux moteurs à injection indirecte dans lesquels les injecteurs de carburant sont situés en amont de la chambre de combustion et débouchent dans les conduits d'admission, les moteurs à injection directe comportent des injecteurs de carburant débouchant directement dans les chambres de combustion des cylindres-moteurs.

Un tel moteur à injection directe est par exemple décrit dans le brevet américain n° 5 127 379. Dans ce moteur, l'injecteur associé à chaque cylindre-moteur est situé sous les conduits d'admission et débouche directement dans la chambre de combustion limitée d'une part par l'élément de culasse et d'autre part par la face supérieure d'un piston coulissant dans le cylindre-moteur. Sur la face supérieure du piston est ménagée une cavité comportant une discontinuité de surface interne formant une marche au niveau de la bougie et ménageant ainsi au sein de cette cavité une zone primaire recevant le jet d'essence de l'injecteur et une zone secondaire située sous la bougie.

L'invention vise à proposer une conception radicalement différente de la chambre de combustion.

Une difficulté de conception d'une culasse en injection directe, sur le modèle des architectures de culasses des moteurs conventionnels, réside notamment dans l'implantation de l'injecteur. Un but de l'invention est de pouvoir réaliser une implantation d'injecteur utilisant une architecture classique de conduits d'admission ne nécessitant éventuellement qu'une faible réduction du diamètre des soupapes, tout en contrôlant le phénomène de stratification (transport du carburant liquide vers la bougie d'allumage) bien connu de l'homme du métier.

L'invention propose donc un moteur à combustion interne à injection directe et allumage commandé, comprenant une chambre de combustion à bougie centrée et injecteur excentré.

Selon une caractéristique générale de l'invention, le moteur comprend un élément de culasse en forme de toit dont l'arête s'étend entre les orifices d'admission et les orifices d'échappement avec l'injecteur excentré débouchant dans la chambre entre les plans diamétraux verticaux, perpendiculaires à l'arête, des orifices d'admission. Par ailleurs, le moteur comprend également un piston coulissant dont la face supérieure comporte une cavité centrée sous la bougie ainsi qu'un canal s'étendant depuis une zone située sous l'injecteur jusque dans la cavité centrée.

En variante, le moteur selon l'invention comprend un piston coulissant dont la face supérieure peut comporter une cavité excentrée située sous les orifices d'admission et s'étendant sans discontinuité de surface depuis une zone proche de la périphérie du piston jusqu'à une zone centrale située sous la bougie.

Selon une autre variante, le moteur selon l'invention comprend un piston coulissant dont la face supérieure comporte une cavité excentrée située sous les orifices d'échappement, ainsi qu'un canal s'étendant depuis une zone située sous l'injecteur jusque dans la cavité excentrée.

Selon une autre variante, le moteur selon l'invention comprend un piston coulissant dont la face supérieure comporte une cavité excentrée s'étendant sensiblement perpendiculairement à l'arête du toit sous un orifice d'admission et sous un orifice d'échappement.

Quelles que soient les variantes de l'invention, il est particulièrement avantageux que la face supérieure du piston épouse partiellement la forme de l'élément de culasse afin notamment de permettre l'obtention d'un taux de compression compris entre 10 et 12.

D'autres avantages et caractéristiques de l'invention apparaîtront à l'examen de la description détaillée de modes de réalisation de l'invention, nullement limitatifs, et des dessins annexés sur lesquels :
- les figures 1A, 1B et 1C illustrent de façon schématique, sous différentes orientations, un premier mode de réalisation d'une chambre de combustion d'un moteur selon l'invention,
- la figure 2 illustre de façon schématique, en vue de dessus, un deuxième mode de réalisation d'un piston d'un moteur selon l'invention,
- les figures 3A, 3B et 3C illustrent de façon schématique, sous différentes orientations, les différents constituants d'un troisième mode de réalisation d'une chambre de combustion d'un moteur selon l'invention et,
- les figures 4A, 4B et 4C illustrent de façon schématique, sous différentes orientations, les différents éléments d'un quatrième mode de réalisation d'une chambre de combustion d'un moteur selon l'invention.

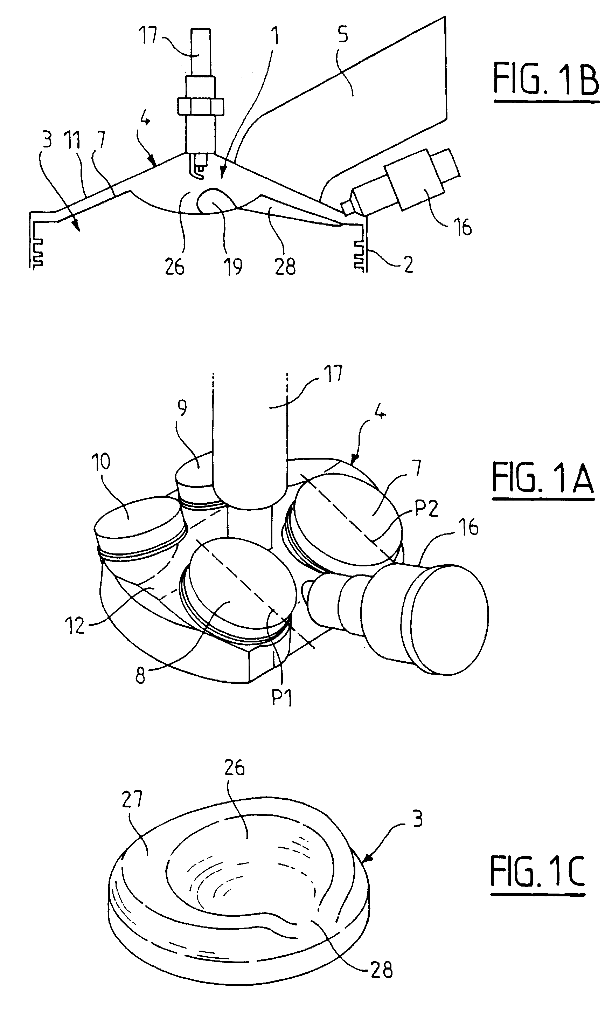

Sur les figures 1A à 1C la référence 1 désigne une chambre de combustion selon l'invention, délimitée par les parois d'un cylindre-moteur 2, la face supérieure d'un piston 3 coulissant dans le cylindre 2 et la face inférieure d'un élément de culasse 4.

L'élément de culasse 4 comporte une partie 11 en forme de toit dont l'arête 12 s'étend entre les deux orifices d'admission 7 et 8 et les deux orifices d'échappement 9 et 10. D'une façon classique, les deux orifices d'admission 7 et 8 reçoivent deux conduits d'admission (un seul est référencé 5). D'une façon analogue, sur les deux orifices d'échappement 9 et 10 sont fixés deux conduits d'échappement non représentés ici à des fins de simplification.

Une bougie 17 débouche au niveau de l'arête 12 de l'élément de culasse 4 au centre de la chambre de combustion 1, c'est-à-dire sensiblement dans l'axe du cylindre-moteur. Par ailleurs, un injecteur 16, excentré par rapport à la bougie 17, s'étend sous les conduits d'admission et débouche dans la chambre de combustion 1 entre les plans diamétraux verticaux P1 et P2, perpendiculaires à l'arête 12, des deux orifices d'admission 8 et 7. Plus précisément, dans cet exemple, le nez de l'injecteur est en retrait par rapport aux orifices d'admission. Sur la figure 1A et sur la figure 1B qui représente une vue partielle de la chambre de combustion dans le plan vertical médian contenant la bougie et l'injecteur, l'injecteur 16 est fortement incliné et se situe dans une zone non utilisée par tout autre accessoire de la culasse. Ce positionnement peut être ainsi envisagé avec seulement une faible réduction du diamètre des soupapes. Néanmoins, en raison de l'éloignement de l'injecteur par rapport à la bougie, une adaptation de la forme de la chambre de combustion au niveau du piston est nécessaire pour contrôler la stratification, c'est-à-dire le transport du carburant liquide vers la bougie.

A cet égard, le piston 3 présente une cavité 26 centrée (par rapport à l'axe du cylindre moteur) et située sous la bougie. En d'autres termes, le périmètre de cette cavité inclut la trace de la bougie sur la face supérieure du piston.

Un canal 28, plus étroit que la cavité, s'étend depuis une zone située sous l'injecteur incliné 16 jusque dans la cavité centrée 26. Ce canal, situé dans une portion inclinée du piston épousant partiellement la forme de l'élément de culasse, permet de guider le jet de carburant vers la bougie.

La cavité est de préférence un bol ayant sensiblement la forme d'une demi-sphère.

Enfin, afin de permettre l'obtention d'un taux de compression compris entre 10 et 12, la face supérieure du piston épouse partiellement la forme de l'élément de culasse. Plus précisément, la face supérieure du piston comporte une partie latérale ayant également la forme d'un toit complémentaire de celui ménagé sur la face inférieure de l'élément de culasse.

Outre les caractéristiques de la chambre de combustion qui vient d'être évoquée, le transport de la phase gazeuse du carburant vers la bougie est encore amélioré par des effets convectifs aérodynamiques. En effet, la structuration d'un mouvement aérodynamique dans la chambre de combustion, persistant en fin de combustion, permet de contrôler davantage la stabilité de la distribution en carburant. En outre, la mise en rotation du mélange combustible permet d'améliorer la stabilité du moteur pour des points de fonctionnement en mélange pauvre homogène.

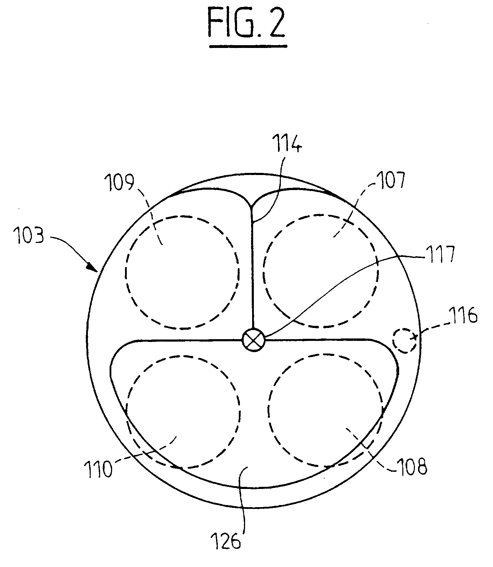

Dans la variante de réalisation de la figure 2, le piston 103 présente sur sa face supérieure une cavité excentrée 126 s'étendant, sensiblement perpendiculairement à l'arête 114 du toit du piston, sous l'orifice d'admission 108 et sous l'orifice d'échappement 110.

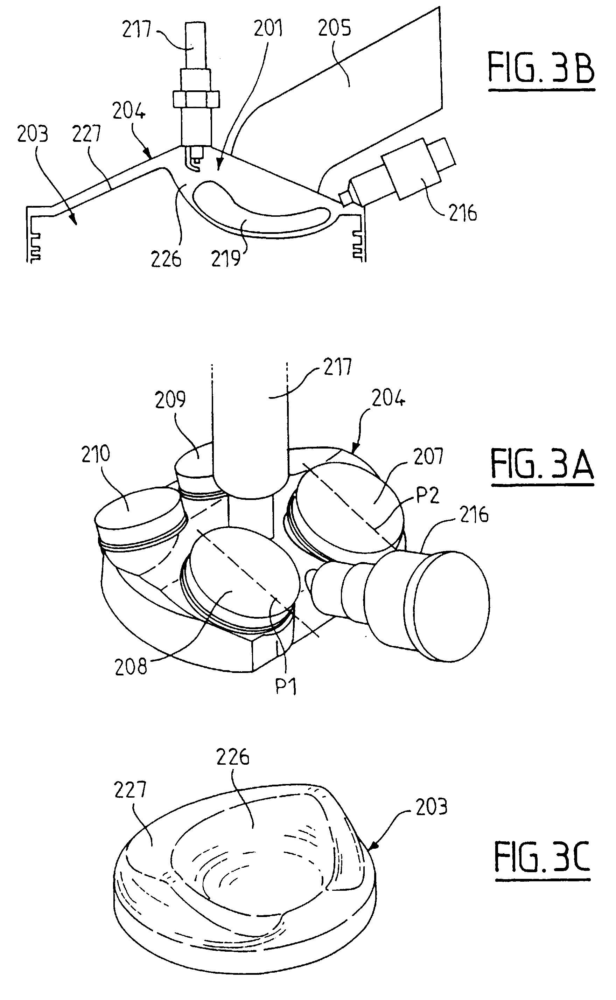

Sur les figures 3A à 3C, les éléments analogues ou ayant des fonctions analogues à ceux représentés sur les figures 1A à 1C ont des références augmentées de 200 par rapport à celles qu'avaient ces mêmes éléments sur les figures 1A à 1C. A des fins de simplification, seules les différences entres ces deux séries de figures seront maintenant décrites.

Dans toutes les variantes de réalisation de l'invention, l'injecteur est fortement incliné par rapport au plan vertical contenant l'arête du toit et la bougie (comme illustré notamment sur la figure 3B qui est une vue partielle de la chambre de combustion selon l'invention dans le plan vertical médian contenant la bougie et l'injecteur) de manière à pouvoir être implanté en utilisant une architecture classique de conduits d'admission.

Ceci étant, l'inclinaison de l'injecteur et la position éloignée de celui-ci vis-à-vis de la bougie nécessitent également une adaptation de la forme de la chambre au niveau du piston pour transporter le carburant vers la bougie.

Dans le mode de réalisation illustré sur les figures 3A à 3C, la face supérieure du piston coulissant 203 comporte une cavité excentrée 226 située sous les orifices d'admission 205, 206 et s'étendant sans discontinuité de surface depuis une zone proche de la périphérie du piston jusqu'à une zone centrale située sous la bougie.

La courbure de la cavité excentrée 226 est ajustée pour permettre d'orienter le jet de carburant 219, pénétrant tangentiellement dans la cavité 226, vers la bougie 217. On pourra à cet égard prévoir une cavité en bol ayant avantageusement la forme d'une demi-sphère.

Dans cette variante, un mouvement de type "tumble" (mouvement tourbillonnaire d'axe perpendiculaire à l'axe du cylindre-moteur) sera avantageusement induit dans la chambre de combustion. Ce mouvement permettra en mode de fonctionnement homogène en mélange pauvre d'accroître la stabilité du moteur. A cet égard, le moteur selon l'invention pourra comporter par exemple une cale à boisseau rotatif venant obturer la demi-partie inférieure des conduits d'admission, cette cale étant intercalée entre la culasse et le collecteur d'admission. Là encore, ce système permettant de faire varier l'aérodynamique, sera rendu inopérant aux régimes élevés en mode de fonctionnement à richesse 1.

Enfin, au niveau du piston 203, il est avantageusement prévue une rampe 227 permettant à la face supérieure du piston d'épouser partiellement la forme de l'élément de culasse 204 en forme de toit, et ce de façon à permettre l'obtention d'un taux de compression compris entre 10 et 12.

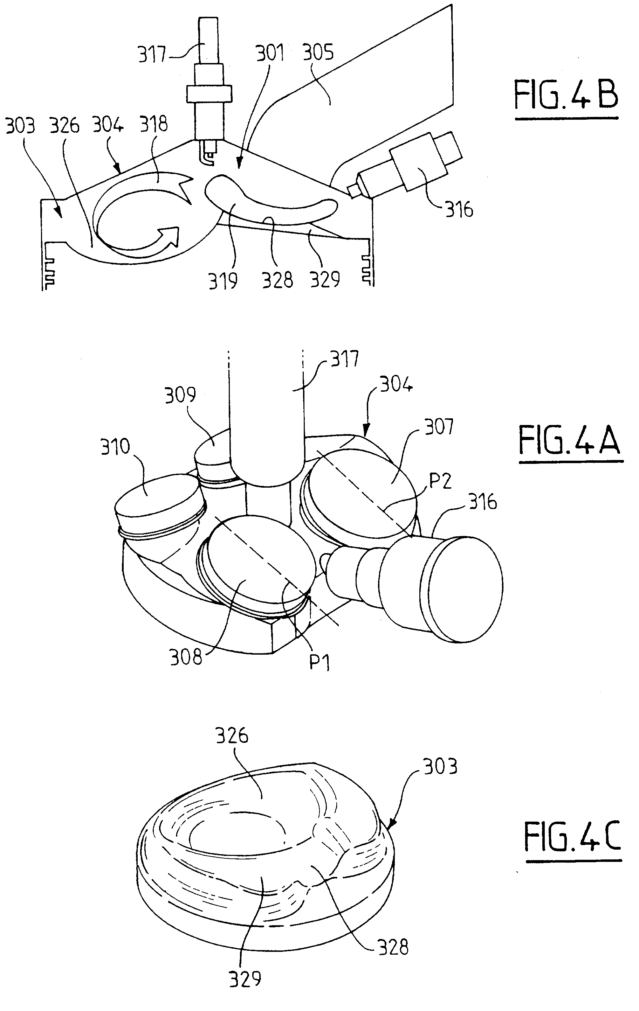

Sur les figures 4A à 4C, les éléments analogues ou ayant des fonctions analogues à ceux illustrés sur les figures 3A à 3C ont des références augmentées de 100 par rapport aux références de ces mêmes éléments illustrés sur les figures 3A à 3C. Là encore, seules les différences entre ces deux séries de figures seront maintenant décrites.

Dans cette variante de réalisation, la face supérieure du piston coulissant 303 comporte une cavité excentrée 326 située cette fois-ci sous les orifices d'échappement 309 et 310 ainsi qu'un canal 328, plus étroit que la cavité, s'étendant depuis une zone située sous l'injecteur incliné 316 jusque dans la cavité excentrée 326.

Ce canal, situé dans une portion inclinée 329 du piston épousant partiellement la forme de l'élément de culasse, permet de guider le jet de carburant, pénétrant tangentiellement dans le canal, vers la bougie 317.

Egalement dans cette variante, un mouvement de type "tumble" sera avantageusement induit dans la chambre de combustion. En outre, la présence d'une cavité excentrée, par exemple un bol ayant avantageusement la forme d'une demi-sphère, et d'un canal sous l'admission permet de combiner un effet de chasse ("squish" en langue anglaise) sous les soupapes d'admission, et un effet de déflexion du jet de carburant en sortie du canal vers la bougie.

## Revendications

1. Moteur à combustion interne à injection directe et allumage commandé, comprenant une chambre de combustion (1), à bougie centrée et injecteur excentré, caractérisé par le fait qu'il comprend un élément de culasse (4) en forme de toit dont l'arête (12) s'étend entre les orifices d'admission (7, 8) et les orifices d'échappement (9,10) avec l'injecteur excentré (16) débouchant dans la chambre entre les plans diamétraux verticaux (P1, P2), perpendiculaires à l'arête (12), des orifices d'admission (7, 8) , et par le fait qu'il comprend un piston coulissant (3) dont la face supérieure comporte une cavité (26) centrée sous la bougie ainsi qu'un canal (28) s'étendant depuis une zone située sous l'injecteur jusque dans la cavité centrée (26).

2. Moteur selon la revendication 1, caractérisé par le fait que la cavité centrée (26) a sensiblement la forme d'une demi-sphère.

3. Moteur à combustion interne à injection directe et allumage commandé, comprenant une chambre de combustion (201) à bougie centrée et injecteur excentré, caractérisé par le fait qu'il comprend un élément de culasse (204) en forme de toit dont l'arête s'étend entre les orifices d'admission (207, 208) et les orifices d'échappement (209, 210) avec l'injecteur excentré (216) débouchant dans la chambre entre les plans diamétraux verticaux (P1, P2), perpendiculaires à l'arête, des orifices d'admission (207, 208), et par le fait qu'il comprend également un piston coulissant (203) dont la face supérieure comporte une cavité excentrée (226) située sous les orifices d'admission (207, 208) et s'étendant sans discontinuité de surface depuis une zone proche de la périphérie du piston jusqu'à une zone centrale située sous la bougie (217).

4. Moteur à combustion interne à injection directe et allumage commandé, comprenant une chambre de combustion (301) à bougie centrée et injecteur excentré, caractérisé par le fait qu'il com prend un élément de culasse (304) en forme de toit dont l'arête s'étend entre les orifices d'admission (307, 308) et les orifices d'échappement (309, 310) avec l'injecteur excentré (316) débouchant dans la chambre entre les plans diamétraux verticaux (P1, P2), perpendiculaires à l'arête, des orifices d'admission (307, 308), et par le fait qu'il comprend également un piston coulissant (303) dont la face supérieure comporte une cavité excentrée (326) située sous les orifices d'échappement (309, 310), ainsi qu'un canal (328) s'étendant depuis une zone située sous l'injecteur (316) jusque dans ladite cavité excentrée (326).

5. Moteur selon l'une des revendications 1, 2 ou 4, caractérisé par le fait que le canal (28; 328) est plus étroit que la cavité (26; 326).

6. Moteur à combustion interne à injection directe et allumage commandé, comprenant une chambre de combustion à bougie centrée et injecteur excentré, caractérisé par le fait qu'il comprend un élément de culasse en forme de toit dont l'arête s'étend entre les orifices d'admission et les orifices d'échappement avec l'injecteur excentré débouchant dans la chambre entre les plans diamétraux verticaux, perpendiculaires à l'arête, des orifices d'admission, et par le fait qu'il comprend un piston coulissant (103) dont la face supérieure comporte une cavité excentrée (126) s'étendant sensiblement perpendiculairement à l'arête du toit sous un orifice d'admission (108) et sous un orifice d'échappement (110).

7. Moteur selon l'une des revendications 3 à 6, caractérisé par le fait que la cavité excentrée (126; 226; 326) a sensiblement la forme d'une demi-sphère.

8. Moteur selon l'une des revendications précédentes, caractérisé par le fait que la face supérieure du piston (3; 103; 203; 303) épouse partiellement la forme de l'élément de culasse (4; 204; 304).

9. Moteur selon l'une quelconque des revendications précédentes, caractérisé par le fait que l'injecteur (16; 116; 216; 316) est situé dans le plan vertical médian de la culasse contenant également la bougie (17; 117; 217; 317).
